# EUROPEAN PATENT SPECIFICATION

(11) **EP 4 348 197 B1**
(45) Date of publication and mention of the grant of the patent: **09.07.2025**
(21) Application number: 22729714.0
(22) Date of filing: 20.05.2022
(51) Int. Cl.: G01J 5/00, G01J 5/02, G01J 5/12, H05B 47/115, H05B 47/13

(54) **SYSTEMS AND METHODS FOR DETERMINING A CONFIGURATION OF OCCUPANTS IN A SPACE USING SENSORS WITH SINGLE-PIXEL THERMOPILES**
SYSTEME UND VERFAHREN ZUR BESTIMMUNG EINER KONFIGURATION VON INSASSEN IN EINEM RAUM UNTER VERWENDUNG VON SENSOREN MIT EINZELPIXELTHERMOSÄULEN
SYSTÈMES ET PROCÉDÉS POUR DÉTERMINER UNE CONFIGURATION D'OCCUPANTS DANS UN ESPACE UTILISANT DES CAPTEURS AVEC DES THERMOPILES À PIXEL UNIQUE

(30) Priority: 03.06.2021 US 202163196298 P; 15.06.2021 EP 21179383
(43) Date of publication of application: 10.04.2024
(73) Proprietor: Signify Holding B.V., 5656 AE Eindhoven (NL)
(72) Inventor: MURTHY, Abhishek, 5656 AE Eindhoven (NL); YU, Jin, 5656 AE Eindhoven (NL)
(74) Representative: Verweij, Petronella Daniëlle
(86) International application number: PCT/EP2022/063794
(87) International publication number: WO 2022/253600

(56) References cited:
- JP-A- 2014 202 614
- US-A1- 2017 097 264
- US-A1- 2020 089 967

## Description

### FIELD OF THE DISCLOSURE

The present disclosure is directed generally to systems and methods for determining a configuration of occupants in a space using sensors with single-pixel thermopiles.

### BACKGROUND

When individuals are admitted for healthcare testing or treatment, they are not typically permitted to walk to and/or from the tests or treatment by themselves. Instead, the individuals or patients are escorted in wheelchairs, stretchers, gurneys, or the like by one or more authorized healthcare workers. Proper patient transport requires knowledge, skill, equipment, and communication, the failure of any of which can cause a minor injury, such as, a cut from pinching a finger on an unprotected rail, or a catastrophe, such as, a traumatic brain injury or death from a fall. Considering the number of hospital admissions in the United States, if each patient was transported to their room, to and from one test, and then from their room to the exit, there would be at least 140 million opportunities for an injury during patient transport. Moreover, it is estimated that more often than not, hospital incidents during patient transport are not reported. Most healthcare providers commit considerable resources to training, equipment upgrades, and facility investments in an effort to prevent these incidents from occurring.

Wheelchair assistance is also critical in airports and other transportation hubs. For example, the number of people who need wheelchair assistance at airports grows steadily and at a significantly higher rate than the increase in annual number of airway travelers. People who need wheelchair assistance are sometimes referred to as passengers with reduced mobility (PRMs). Safe transport of PRMs is critical to an efficient and safe transportation system.

Additionally, airports, like healthcare facilities, face problems keeping track of their fleets of wheelchairs. These problems are causing substantial losses each year. Conventional systems and methods of tracking wheelchairs involve augmenting the wheelchairs or otherwise using additional equipment, such as, visible light communication (VLC) sensors or Bluetooth low-energy localization sensors. Unfortunately, such sensors may be expensive and/or vulnerable to privacy attacks.

US 2017/097264 A1 relates to an occupancy detection system using a thermopile detector.

JP2014 202614 A discloses a further device using a single pixel thermopile and differentiates between different numbers of occupants in the observation area.

Thus, there is a need in the art for improved systems and methods for monitoring and tracking the transportation of patients and PRMs in healthcare facilities and transportation hubs while respecting privacy concerns.

### SUMMARY OF THE INVENTION

The above need is met by a system for determining a configuration of one or more occupants in a space with the features of claim 1 and corresponding method with the steps of claim 9. Favourable embodiments are defined in the dependent claims.

The present disclosure is directed generally to inventive systems and methods for monitoring the transportation of patients and passengers with reduced mobility (PRMs) using sensor devices with single-pixel thermopiles (SPT). Generally, embodiments of the present disclosure are directed to improved systems and methods for determining a configuration of one or more occupants in a space using a connected lighting system having SPT sensors embedded in the luminaires and optionally on doorways. The inventive systems and methods involve detecting step changes in a SPT signal, classifying the detected step change into two or more classes, calculating confidence scores with each classification, and analyzing events detected by SPT sensors across a space or building to supplement the classification and/or update wheelchair locations. If an unacceptable configuration of occupants is detected, the inventive systems and methods can provide notifications of such a configuration. Applicant has recognized and appreciated that features of a shape or pattern of a SPT signal are strongly correlated with a number of people and their configurations. Such features can be used to monitor the transportation of patients and PRMs (including those PRMs in wheelchairs) without requiring any augmentation for tracking and while respecting privacy concerns. The SPT sensors of the systems and methods are also advantageous since they are not costly.

Generally, in one aspect, a system for determining a configuration of one or more occupants in a space is provided. The system includes at least one sensor device having a single-pixel thermopile in the space, wherein the single-pixel thermopile is configured to capture sensor signals related to one or more occupants in the space; and a controller in communication with the at least one sensor device in the space. The controller of the system is configured to: determine or obtain training data for detecting first and second configurations of one or more occupants in the space; receive a temperature signal from the single-pixel thermopile, the temperature signal corresponding to a detection area in the space that is within a field-of-view of the single-pixel thermopile over time; detect a change in the temperature signal, the change being equal to or larger than a predetermined step threshold; determine first and second probabilities for at least one feature of a shape or pattern of the temperature signal, the first and second probabilities corresponding to the first and second configurations of the one or more occupants in the space based on the training data, respectively; and identify a class label for the temperature signal based on the determined first and second probabilities, wherein the class label corresponds with the first or second configurations of the one or more occupants in the space.

In embodiments, when the class label corresponds with the first configuration, the controller is further configured to determine whether the first probability for the at least one feature of the shape or pattern of the temperature signal corresponding to the first configuration exceeds a predetermined probability threshold.

In embodiments, when the first probability for the at least one feature of the shape or pattern of the temperature signal corresponding to the first configuration exceeds the predetermined probability threshold, the controller is further configured to provide a notification comprising information of the first configuration of the one or more occupants in the space.

In embodiments, when the first probability for the at least one feature of the shape or pattern of the temperature signal corresponding to the first configuration does not exceed the predetermined probability threshold, the controller is further configured to transmit a signal comprising information on the at least one feature of the shape or pattern of the temperature signal corresponding to the first configuration to another sensor device or another controller in the space.

In embodiments, when the first probability for the at least one feature of the shape or pattern of the temperature signal corresponding to the first configuration does not exceed the predetermined probability threshold, the controller is further configured to receive a signal comprising information on a shape or pattern of another temperature signal corresponding to the first configuration from another sensor device or another controller in the space.

In embodiments, the controller is further configured to fuse the signal comprising the information on the at least one feature of the shape or pattern of the temperature signal corresponding to the first configuration with the signal comprising information on the shape or pattern of the another temperature signal corresponding to the first configuration from the another second device or the another controller in the space for a subsequent determination regarding the first configuration of the one or more occupants in the space.

In embodiments, the at least one sensor device comprising the single-pixel thermopile is embedded within a luminaire and the luminaire is part of a plurality of connected illumination devices in the space.

In embodiments, the at least one sensor device comprising the single-pixel thermopile is mounted on a doorway of the space.

Generally, in another aspect, a method for determining a configuration of one or more occupants in a space is provided. The method includes: (a) providing at least one sensor device comprising a single-pixel thermopile in the space, the single-pixel thermopile configured to capture sensor signals related to one or more occupants in the space; (b) providing a controller in communication with the at least one sensor device in the space; (c) determining or obtaining, by the controller, training data for detecting first and second configurations of one or more occupants in the space; (d) measuring, with the single-pixel thermopile, a temperature signal of a detection area in the space that is within a field of view of the single-pixel thermopile over time; (e) detecting, with the controller, a change in the temperature signal, the change being equal to or larger than a predetermined step threshold; (f) determining, with the controller, first and second probabilities for at least one feature of a shape or pattern of the temperature signal, the first and second probabilities corresponding to the first and second configurations of the one or more occupants in the space based on the training data, respectively; and (g) identifying, with the controller, a class label for the temperature signal based on the determined first and second probabilities, wherein the class label corresponds with the first or second configurations of the one or more occupants in the space.

In embodiments, when the class label corresponds with the first configuration of the one or more occupants in the space, the method further comprises determining, with the controller, whether the first probability for the at least one feature of the shape or pattern of the temperature signal corresponding to the first configuration exceeds a predetermined probability threshold.

In embodiments, when the first probability for the at least one feature of the shape or pattern of the temperature signal corresponding to the first configuration exceeds the predetermined probability threshold, the method further comprises providing, with the controller, a notification comprising information of the first configuration of the one or more occupants in the space.

In embodiments, when the first probability for the at least one feature of the shape or pattern of the temperature signal corresponding to the first configuration does not exceed the predetermined probability threshold, the method further comprises transmitting, with the controller, a signal comprising information on the at least one feature of the shape or pattern of the temperature signal corresponding to the first configuration to another sensor device or another controller in the space.

In embodiments, the method further comprises fusing the signal comprising the information on the at least one feature of the shape or pattern of the temperature signal corresponding to the first configuration with at least one other signal from the another sensor device for a subsequent determination regarding the first configuration of the one or more occupants in the space.

In embodiments, when the class label corresponds with the second configuration of the one or more occupants in the space, the method further comprises repeating steps (d), (e), (f), and (g) with the controller.

In embodiments, the at least one sensor device comprising the single-pixel thermopile is embedded within a luminaire and the luminaire is part of a plurality of connected illumination devices in the space.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles of the present disclosure.
Fig. 1 illustrates a schematic depiction of a space including at least one sensor device having an embedded single-pixel thermopile sensor, according to aspects of the present disclosure.
Fig. 2A shows a schematic depiction of a connected lighting system including at least one sensor device having a single-pixel thermopile, a controller, and one or more lighting devices, according to aspects of the present disclosure.
Fig. 2B shows a schematic depiction of a connected lighting system including at least one lighting device having a sensor device with a single-pixel thermopile and a controller, according to aspects of the present disclosure.
Fig. 3 shows an example schematic temperature signal from a single-pixel thermopile, according to aspects of the present disclosure.
Fig 4 shows an embodiment of a system and method for monitoring the entry and exit of one or more wheelchairs in a healthcare facility, according to aspects of the present disclosure.
Fig. 5 shows an example method for monitoring the entry and exit of one or more wheelchairs in a space, according to aspects of the present disclosure.
Fig. 6 depicts an example method for determining a configuration of one or more occupants in a space, according to aspects of the present disclosure.

### DETAILED DESCRIPTION OF EMBODIMENTS

The present disclosure describes various embodiments of improved systems and methods for determining a configuration of one or more occupants in a space using a connected lighting system having embedded sensor devices with single-pixel thermopiles (SPT). Applicant has recognized and appreciated that features of a shape or pattern of a SPT signal are strongly correlated with a number of people and their configurations. Applicant has further recognized and appreciated that it would be beneficial to monitor the transportation of patients and passengers with reduced mobility (PRMs) based on the features of the shape or pattern of a SPT signal as described herein. The systems and methods can be trained with data corresponding to two or more configurations of one or more occupants in a space. After setup and training, the systems and methods can detect a step event in one or more measured SPT signals, compute statistical features for a shape or pattern of the one or more measured SPT signals, compute posterior probabilities based on the computed statistical features and the training data, and classify the one or more SPT signals as corresponding to at least one of the two or more configurations of one or more occupants in the space. In exemplary embodiments, Bayesian classification is used to enable the system. In addition to monitoring the transportation of patients in healthcare facilities and PRMs in transportation hubs, such as, airports, the systems and methods described herein can be used to detect tailgating in offices and enabling any suitable safety-related use cases.

The present disclosure describes various embodiments of systems and methods for providing a distributed network of single-pixel thermopile sensors by making use of illumination devices that may already be arranged in a multi-grid and connected architecture (e.g., a connected lighting infrastructure). Such existing infrastructures can be used as a backbone for the additional detection and notification functionalities described herein. Signify's SlimBlend^{®} suspended luminaire is one example of a suitable illumination device equipped with integrated IoT sensors such as microphones, cameras, and thermopile infrared sensors as described herein. In embodiments, the illumination device includes USB type connector slots for the receivers and sensors etc. Illumination devices including sensor ready interfaces are particularly well suited and already provide powering, digital addressable lighting interface (DALI) connectivity to the luminaire's functionality and a standardized slot geometry. It should be appreciated that any illumination devices that are connected or connectable and sensor enabled including ceiling recessed or surface mounted luminaires, suspended luminaires, wall mounted luminaires, and free floor standing luminaires, etc. are contemplated. Suspended luminaires or free floor standing luminaires including thermopile infrared sensors may be advantageous because the sensors are arranged closer to occupants in the space and can detect higher temperatures of people. Additionally, the resolution of the thermopile sensor can be lower than for thermopile sensors mounted within a ceiling recessed or surface mounted luminaire mounted at approximately 3m ceiling height.

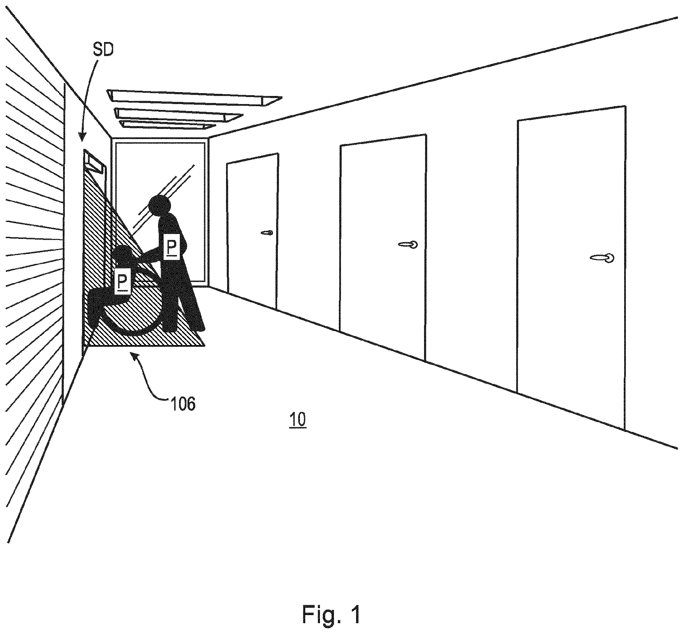

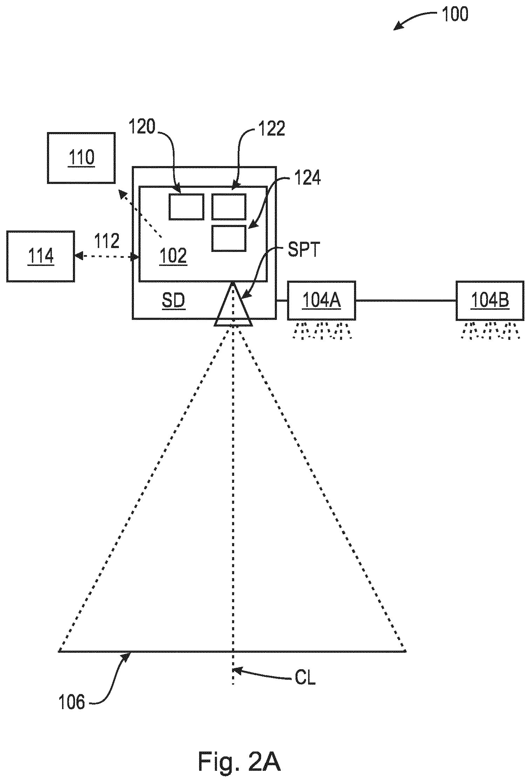

The term "luminaire" as used herein refers to an apparatus including one or more light sources of same or different types. A given luminaire may have any one of a variety of mounting arrangements for the light source(s), enclosure/housing arrangements and shapes, and/or electrical and mechanical connection configurations. Additionally, a given luminaire optionally may be associated with (e.g., include, be coupled to and/or packaged together with) various other components (e.g., control circuitry) relating to the operation of the light source(s). Also, it should be understood that light sources may be configured for a variety of applications, including, but not limited to, indication, display, and/or illumination. Referring to FIG. 1, a schematic depiction of a space 10 including a sensor device SD is shown according to aspects of the present disclosure. Space 10 can be a healthcare facility, such as a hospital or an independent living facility, an airport, an office space etc. Sensor device SD includes a single-pixel thermopile SPT and a controller 102 as shown in FIG. 2A. FIG. 2A shows a schematic depiction of a connected lighting system 100 according to aspects of the present disclosure. Connected lighting system 100 includes at least one sensor device SD having a single-pixel thermopile SPT, a controller 102, and one or more lighting devices 104A, 104B, etc. The single-pixel thermopile SPT and the controller 102 are operatively coupled and accommodated within a same housing of the sensor device SD as shown in FIG. 2A. In alternate embodiments, the single-pixel thermopile SPT and the controller 102 are housed separately. In system 100 shown in FIG. 2A, one or more lighting devices 104A and 104B are operatively coupled with the sensor device SD.

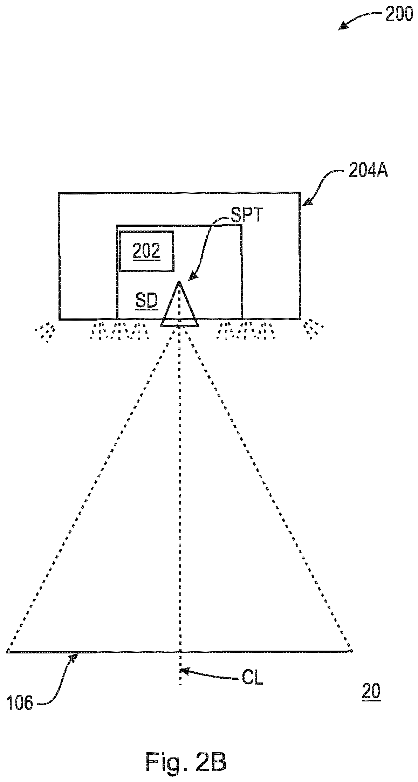

In embodiments, the sensor device SD is embedded within at least one lighting device 204A as shown in the connected lighting system 200 in FIG. 2B. In other words, in embodiments lighting device 204A may comprise sensor device SD having a single-pixel thermopile SPT. In example embodiments, sensor device SD is part of a luminaire, or part of a sensor-bundle that is embodied in or connectable to a luminaire. The at least one lighting device 204A is configured to illuminate a space 20 including detection area 106. The at least one lighting device 204A can also be configured to provide notifications as described herein as a result of the controller 202 determining a configuration of one or more occupants in detection area 106 in space 20.

Each lighting device or luminaire includes one or more light sources which can include light emitting diodes (LEDs) that are disposed on a printed circuit board. The LEDs can be configured to be driven to emit light of a particular character (i.e., color intensity and color temperature) by one or more light source drivers. The LEDs may be active (i.e., turned on); inactive (i.e., turned off); or dimmed by a factor d, where 0 ≤ d ≤ 1. The value d = 0 means that the LED is turned off whereas d = 1 represents an LED that is at its maximum illumination.

Controller 102 includes a network interface 120, a memory and/or storage device 122, and one or more processors 124. The network interface 120 can be embodied as a wireless transceiver or any other device that enables the connected luminaires to communicate wirelessly with each other within connected lighting system 100 as well as with other devices including mobile devices utilizing the same wireless protocol standard and/or to otherwise monitor network activity and enables the controller 102 to receive data from the SPT sensors SPT. In embodiments, the network interface 120 may use wired communication links. The SPT sensors are configured to transmit data to the one or more processors 124 of controller 102 via any suitable wired/wireless network communication channels. In embodiments, the data can be transmitted directly to the one or more processors 124 of controller 102 without passing through a network. The data can be stored in the memory 122 of controller 102 via the wired/wireless communication channels. The memory 122 and one or more processors 124 of controller 102 may take any suitable form in the art for controlling, monitoring, and/or otherwise assisting in the operation of the lighting devices, 104A, 104B, 204A, the SPT sensors, and performing other functions of controller 102 described herein. The one or more processors 124 of controller 102 are also capable of executing instructions stored in the memory 122 or otherwise processing data to, for example, perform one or more steps of the methods described herein. The one or more processors 124 of controller 102 may include one or more modules, such as, one or more modules for capturing data and detecting a step event within the captured data, one or more modules for classifying the step event, one or more modules for analyzing the step event classification based on associated confidence scores, and one or more training modules as described herein. Although the following description details embodiments employing Bayesian classification techniques, the disclosure should not be so limited. Any suitable form of classification is contemplated. For example, logistic regression or any other suitable alternative can be used.

In the embodiment shown in FIG. 1, sensor device SD is mounted within a doorway and facing downward toward the floor of area 10. In alternate embodiments, sensor device SD is mounted in the doorway and angled toward the floor of area 10. Sensor device can also be mounted in or to the ceiling and facing straight downward toward the floor of area 10 or at an angle toward the floor. Single-pixel thermopile SPT converts thermal energy into electrical energy within detection area 106 in space 10. Detection area 106 is an area to be monitored by single-pixel thermopile SPT. The detection area 106 is embodied as a volumetric cone having centerline CL as shown in FIGS. 2A and 2B. Centerline CL emanates from a center of the single-pixel thermopile SPT in FIGS. 2A and 2B. The volumetric cone may be considered as the field-of-view of the single-pixel thermopile SPT. Thus, detection area 106 corresponds with the single-pixel resolution of the single-pixel thermopile SPT. In FIG. 1, only approximately half of the volumetric cone of detection area 106 is visible due to how the sensor device SD is mounted in space 10. In FIGS. 2A and 2B, detection area 106 represents a 90 degree field-of-view but, it should be appreciated that the field-of-view can be increased or decreased depending on the application or the type of single-pixel thermopile SPT. Detection area 106 can also be considered as a two-dimensional footprint of the volumetric cone on a surface area, e.g., a floor of a space.

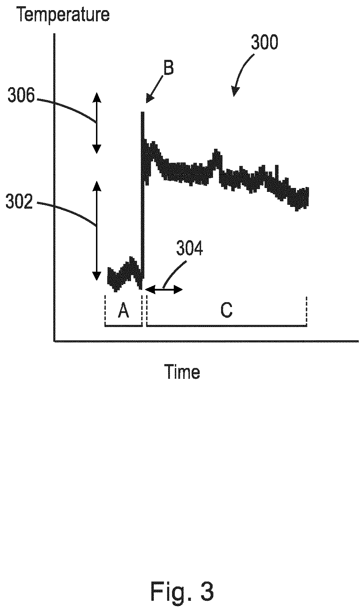

The conversion of thermal energy into electrical energy by the single-pixel thermopile SPT generates a SPT sensor signal, which can also be referred to as a temperature signal, a heat signal, or an enthalpy signal. The temperature signal can also be considered an object infrared (IR) measurement signal. The single-pixel thermopile SPT generates a single temperature value due to the single-pixel resolution. An example temperature signal 300 is shown in FIG. 3 over a period of time on the horizontal (X) axis. The example signal 300 shows drastic changes over time when one or more persons P enter or exit the detection area 106 or the field-of-view. Thus, when temperature signal 300 is measured over a period of time, temperature signal 300 includes a transient temperature response (or a heat response) of the complete detection area 106.

As shown in FIG. 3, signal 300 includes portions A, B, and C in embodiments. In embodiments, other signals can include additional portions. Portion A of signal 300 represents a temperature of the detection area 106 without any persons P present at the beginning of a period of time. After portion A, one or more persons P enter the detection area 106 which causes a step change B in the IR signal. A step change refers to an abrupt change, step, jump, or shift in a mean temperature level of a time series or signal. As the one or more persons P continues to move further within the detection area 106 over the period of time after step change B, the IR signal decreases gradually during portion C.

Applicant has recognized and appreciated that a size of the step change B along with other statistical features like the rise time and overshoot are strongly correlated with a number of people detected within the detection area 106 and/or their configuration within the detection area 106. The size of step change B is shown in FIG. 3 at 302. The term "size" with reference to a step change refers to an amount of temperature change between a particular low temperature value or a range of low temperature values and a particular high temperature value or a range of high temperature values. The change in the temperature signal at 302 must be equal to or larger than predetermined step threshold to avoid detecting minimal fluctuations in the temperature signal that are not indicative of a step event such as at least one person entering/exiting the detection area.

The rise time of step change B of FIG. 3 is shown at 304. The term "rise time" refers to an amount of time taken by a signal to change from a particular low temperature value or a range of low temperature values to a particular high temperature value or a range of high temperature values. The overshoot of step change B of FIG. 3 is shown at 306. The term "overshoot" refers to the transient temperature values that exceed its steady state or final value during the transition from the low temperature value or range of low temperature values to the high temperature value or range of high temperature values. The step size, rise time, and overshoot are example signal features that can be strongly correlated with a number of people detected within a detection area 106 and/or their configuration within a detection area 106.

For example, a step size, such as size 302 in FIG. 3, for two people as they walk into or out of the field-of-view of the SPT is larger than a step size for a single person as they walk into or out of the field-of view of the SPT. Positive step sizes correspond to people walking into the field-of-view. Negative step sizes correspond to people walking out of the field-of-view.

The step size can also be analyzed as a function of the distance from the SPT. Generally, the step size for a person entering the field-of-view while walking is larger than the step size for a person entering the field-of-view while sitting. The step size can be analyzed within 1 meter of the SPT, however any suitable distance can be used depending on the application. The step size for a person facing the SPT is generally larger than the step size for a person having their back to the SPT. Thus, a person standing and facing the sensor generally has the largest step size. A person seated and facing the sensor generally has the second to largest step size. A person standing with their back to the sensor generally has the next largest step size. A person seated with their back to the sensor generally has the lowest step size relative to the three other configurations. The step size is larger for those people facing the SPT because more heat is emitted from the face than the amount of heat emitted from the back of the head.

Statistical features for two people entering the field-of-view are generally characterized as superpositions of the individual effects of the persons. Thus, if two people are standing while entering the field-of-view, the step size is approximately twice the size of the step detected for a single person standing while entering the field-of-view. The same holds true for three people entering the field-of-view. Thus, if three people are standing while entering the field-of-view, the step size is approximately three times the size of the step detected for a single person standing while entering the field-of-view.

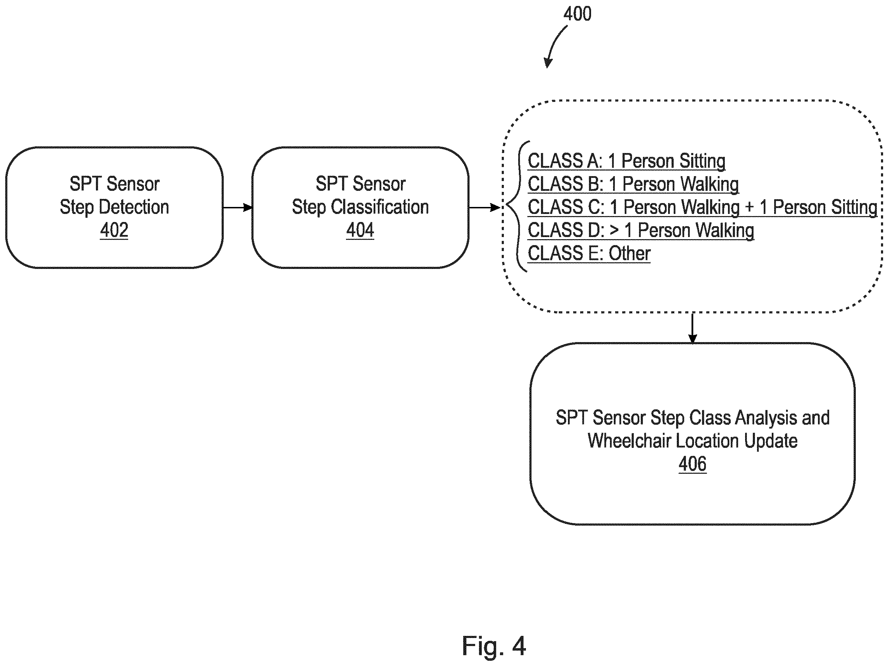

As further described herein, the single-pixel thermopile SPT and/or the controller 102 can be trained for detecting configurations of occupants in a space based on a shape or pattern of a detected temperature signal. As described herein, the training can be carried out with a supervised learning approach that requires a substantial amount of labelled data. The training can alternatively be carried out with a representative learning approach that requires a large amount of unlabelled data after the system is installed in the space. In embodiments, controller 102 obtains a temperature signal that is conveyed from single-pixel thermopile SPT. As shown in FIG. 4, an embodiment of a system and method for monitoring the entry and exit of wheelchairs in a facility is shown. The system and method 400 of FIG. 4 includes a system and method for detecting a step change in a temperature signal 402, a system and method for classifying the detected step change 404, and a system and method for analyzing the classified detected step change 406. Advantageously, the systems and methods described herein can track the entry and exit of wheelchairs in a facility without having to augment the wheelchairs with tracking devices.

The system and method for detecting a step change in a temperature signal 402 involves comparing temperature changes in a detected signal with a predetermined step threshold. If a temperature change is equal to or larger than the predetermined step threshold, then it can be determined that a step event has occurred.

The system and method for classifying the detected step change 404 involves determining whether one or more signal features of the detected step change are sufficiently similar to signal features associated with one or more classes. The classes can include a class that identifies a number and/or configuration of occupants in the space that is anomalous or unacceptable and one or more classes that identify a number and/or configuration of occupants in the space that is normal or acceptable. In embodiments, the anomalous or unacceptable scenario or class is one which identifies only a single person sitting in a wheelchair without anyone accompanying them. In this case, the systems and methods can detect when a person in a wheelchair is not being escorted according to facility policies and procedures. The normal or acceptable scenarios or classes can include one which identifies a single person walking with no seated persons present, another which identifies a single person walking with another person sitting, another which identifies more than one person walking with no seated persons present, and another scenario or class that is different from the others. One or more of the normal or acceptable scenarios or classes can be combined in any combination. Additional normal or acceptable scenarios or classes not enumerated above are also contemplated.

One particular advantage of the systems and methods described herein is that the wheelchairs detected in the classified configurations can be tracked among multiple SPT sensors in a space without the need for any additional tracking augmentations. Another advantage of the systems and methods described herein is that one or more unique SPT signals can be learned for individuals that are routinely present in the space.

The anomalous or unacceptable scenario or class can be CLASS A shown in FIG. 4 where one or more features of the detected temperature signal indicate only a single person sitting in a wheelchair is entering or exiting the detection area 106.

The normal or acceptable scenarios or classes listed above are shown in FIG. 4 as CLASS B, CLASS C, CLASS D, and CLASS E. When one or more features of a detected temperature signal indicates a single person walking with no seated persons present, the signal can be classified as CLASS B. Since no seated persons are present, it is not likely that a person in a wheelchair is entering or exiting the detection area 106 without an escort as indicated with a signal associated with CLASS A. When one or more features of a detected temperature signal indicates a single person walking with another person sitting, the signal can be classified as CLASS C. This configuration represents the situation where a person in a wheelchair is entering or exiting the detection area with an escort as desired in embodiments. When one or more features of a detected temperature signal indicates more than one person walking with no seated persons present, the signal can be classified as CLASS D. Since no seated persons are present (as with CLASS B above), it is not likely that a person in a wheelchair is entering or exiting the detection area 106 without an escort. When one or more features of a detected temperature signal indicates a configuration of occupants in the space that is different than those associated with CLASSES A, B, C, and D, the signal can be classified as CLASS E. Again, since CLASS E does not indicate that there is at least one person in a wheelchair present in the detection area 106 without an escort (as indicated with CLASS A above), the configuration can still be deemed normal or acceptable.

The system and method for analyzing the classified detected step change 406 involves determining whether the classification is sufficiently confident or trustworthy and/or combining information from multiple SPT sensors across the space 10 to perform a subsequent classification based on one or more individual weak determinations. The system and method for analyzing the classified detected step change 406 can also involve updating a location of a wheelchair depending on the configuration detected.

In embodiments using a supervised learning approach and a large amount of labelled data, statistical features for each of the five classes (CLASSES A, B, C, D, and E) are characterized by labelled data and the system is trained by estimating likelihood densities based on the labelled data. These likelihood densities can be learned from data pertaining to step sizes and how they correlate to a number and/or configuration of occupants. For example, the likelihood densities for step sizes for CLASSES A, B, C, D, and E can take the form of P(step_size|A), P(step_size|B), P(step_size|C), P(step_size|D), and P(step_size|E). Similar densities can be learned for other statistical features, such as, rise time and overshoot, from labelled data. With sufficient labelled data for CLASSES A, B, C, D, and E, a time-series deep learning model can be used to learn the features and perform the classification for A-E. Classes A-E cause different step sizes for entry and exit, as well as their amplitude and the ripples that occur during transportation.

After at least one sensor device SD having a single-pixel thermopile SPT is installed in space 10 and controller 102 is installed in space 10 and controller 102 is operably coupled with the at least one sensor device, controller 102 obtains or determines training data for detecting configurations of occupants in the space. The training data can be based on the labelled data as described above or any suitable alternatives. The training data can also be based on the configuration of the at least one sensor device in the space 10. For example, the height of the at least one sensor device SD or the angle at which the at least one sensor device SD is mounted can play a role in the shape or pattern of the features for the signals for CLASSES A, B, C, D, and E. One suitable alternative to generating the training data involves obtaining a large amount of unlabelled data after the system 100 is installed in space 10. Such an alternative involves applying predictive coding for representation learning to the large amount of unlabelled data, to learn the SPT features due to the number of people, their postures, walking speed, etc., then fine-tuning with a small set of labelled data. Then, the learned SPT features can be fed into a classification framework to detect events A-E.

When system 100 is in operation to determine a configuration of one or more occupants in space 10 after training as described herein, single-pixel thermopile SPT measures a temperature signal of detection area 106 and conveys the temperature signal to controller 102. Controller 102 detects a step change in the temperature signal by comparing changes in the signal with at least one predetermined step threshold.

To perform step classification, controller 102 determines a posterior probability for at least one feature of a shape or pattern of the detected step change that at least meets the predetermined step threshold. For an example using the five classes (CLASSES A, B, C, D, and E), controller 102 determines a posterior probability for the statistical features of the detected step change that are being used depending on the application (e.g., step size, rise time, and/or overshoot). The posterior probability for an example detected step change based on step size, rise time, and overshoot relative to the CLASS A features can take the form of P(A|step_size, overshoot, rise_time) ∝ P(step_size|A).P(overshoot|A).P(rise_time|A).P(A), where the first three terms on the right of the proportionality are likelihoods learned during training and P(A) is the prior bias of the true event having been of CLASS A. The prior probability can be adjusted based on different types of areas in the healthcare facility or for different types of healthcare facilities. In embodiments, the relationship between the posterior probabilities and the likelihoods can also accommodate for dependencies, for example, between step size and overshoot. The posterior probability for a detected step change based on step size, rise time, and overshoot relative to CLASS B features can take the form of P(B|step_size, overshoot, rise_time) ∝ P(step_size|B).P(overshoot|B).P(rise_time|B).P(B), where the first three terms on the right of the proportionality are likelihoods learned during training and P(B) is the prior bias of the true event having been of CLASS B. The posterior probability for a detected step change based on step size, rise time, and overshoot relative to CLASS C features can take the form of P(C|step_size, overshoot, rise_time) ∝ P(step_size|C).P(overshoot|C).P(rise_time|C).P(C), where the first three terms on the right of the proportionality are likelihoods learned during training and P(C) is the prior bias of the true event having been of CLASS C. The posterior probability for a detected step change based on step size, rise time, and overshoot relative to CLASS D features can take the form of P(D|step_size, overshoot, rise_time) ∝ P(step_size|D).P(overshoot|D).P(rise_time|D).P(D), where the first three terms on the right of the proportionality are likelihoods learned during training and P(D) is the prior bias of the true event having been of CLASS D. The posterior probability for a detected step change based on step size, rise time, and overshoot relative to CLASS E features can take the form of P(E|step_size, overshoot, rise_time) ∝ P(step_size|E).P(overshoot|E).P(rise_time|E).P(E), where the first three terms on the right of the proportionality are likelihoods learned during training and P(E) is the prior bias of the true event having been of CLASS E.

After the posterior probabilities are computed for the detected step change based on step size, rise time, and overshoot relative to CLASSES A, B, C, D, and E, controller 102 identifies a class label for the detected temperature signal. The identified class label corresponds with at least one of the following scenarios: "one person sitting" (CLASS A), "one person walking" (CLASS B), "one person walking and one person sitting" (CLASS C), "more than one person walking" (CLASS D"), and "other" (CLASS E). In an embodiment, the class label is identified by the controller 102 determining the maximum a posteriori probability estimate (MAP).

In an embodiment, if the class corresponds to "one person walking" (CLASS B), "one person sitting and other standing" (CLASS C), ">1 person walking" (CLASS D) or "other" (CLASS E), then no action is taken by the system aside from continuing to monitor the detection area 106. If, on the other hand, the class corresponds to "one person sitting" (CLASS A), where only one person that is in a sitting posture is entering or exiting the detection area 106, then the system can be configured to raise an alarm, but only if the posterior probability is above a certain predetermined probability threshold. The predetermined probability threshold is used in embodiments to reduce the occurrences of false positives. The probability threshold can be tuned using a receiver operating characteristic (ROC) curve in embodiments or any suitable alternative. In such a curve, the true positive rate can be plotted against the false positive rate at various threshold settings. As shown in FIG. 2A, when controller 102 determines a detected temperature signal corresponds with "one person sitting" (CLASS A) as described herein, controller 102 can provide a notification 110 comprising information regarding the CLASS A configuration. The notification can be a visual alert on the sensor device SD, such as, a red light that illuminates or flashes. The visual alert can additionally or alternatively come from one or more lighting devices 104A, 104B, 204A, etc. connected to sensor device SD. In embodiments, the notification can be an audible alert. The audible alert can come from the sensor device SD or a sound system connected to sensor device SD or the one or more lighting devices 104A, 104B, 204A. The notification can additionally or alternatively comprise information that is transmitted to a remote device such as a computing or monitoring device at a nurse's station or some suitable alternative. Controller 102 can output an output signal comprising the information regarding the CLASS A configuration, which output signal is configured to control one or more light sources on the sensor device SD or one or more light sources on the one or more lighting devices 104A, 104B, 204A. The output signal from controller 102 can additionally or alternatively be configured to control one or more speakers on or within the sensor device SD or one or more speakers on or within the one or more lighting devices 104A, 104B, 204A.

If the predetermined probability threshold is not met, information can be broadcast to other sensors or controllers in the space 10 or building so that a joint decision can be made by fusing together the individual weak decisions. As shown in FIG. 2A, when controller 102 identifies a class label but determines that the posterior probability for the signal does not meet a predetermined probability threshold, controller 102 can transmit information 112 regarding the signal to another sensor device or another controller 114 in the space 10. Similarly, controller 102 can receive information 112 regarding another signal from another sensor or another controller 114 in the space 10.

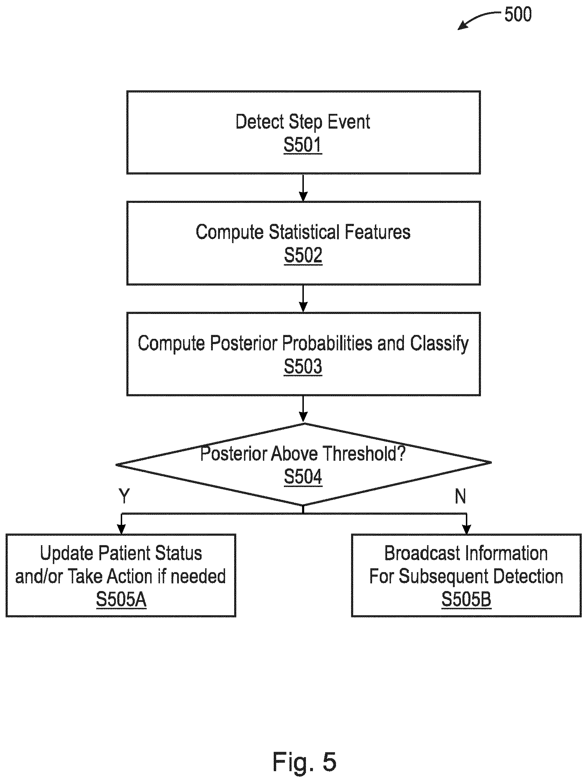

FIG. 5 shows an example method 500 for monitoring the entry and exit of one or more wheelchairs in a space. At step S501, a step event is detected within a temperature signal from a SPT sensor. At step S502, the statistical features of the step event are computed. At step S503, posterior probabilities are computed based on the computed statistical features and training data and a maximum a posteriori probability estimate (MAP) is used to classify the signal with a class label. At step S504, depending on the class label it is determined if the posterior probability associated with the signal is above a predetermined probability threshold. As discussed above, if the class label is one of the acceptable or normal scenarios, there is no need to compare the posterior probability associated with the signal with the predetermined probability threshold. Instead, the system can continue the monitoring steps. On the other hand, if the class label is associated with an anomalous or unacceptable scenario (e.g., an unescorted patient), it is determined if the posterior probability associated with the signal is above the predetermined probability threshold. At step S505A, if the posterior probability is above the predetermined probability threshold, then a status of the patient or the PRM can be updated based on the configuration associated with the class label or any other suitable action, such as, the notification discussed above. On the other hand, at step S505B if the posterior probability is not above the predetermined probability threshold, then information from one or more SPT sensors of the connected lighting system can be broadcast for a subsequent determination of a configuration. The predetermined probability threshold is set at a level such that it represents a sufficient confidence level associated with the classification.

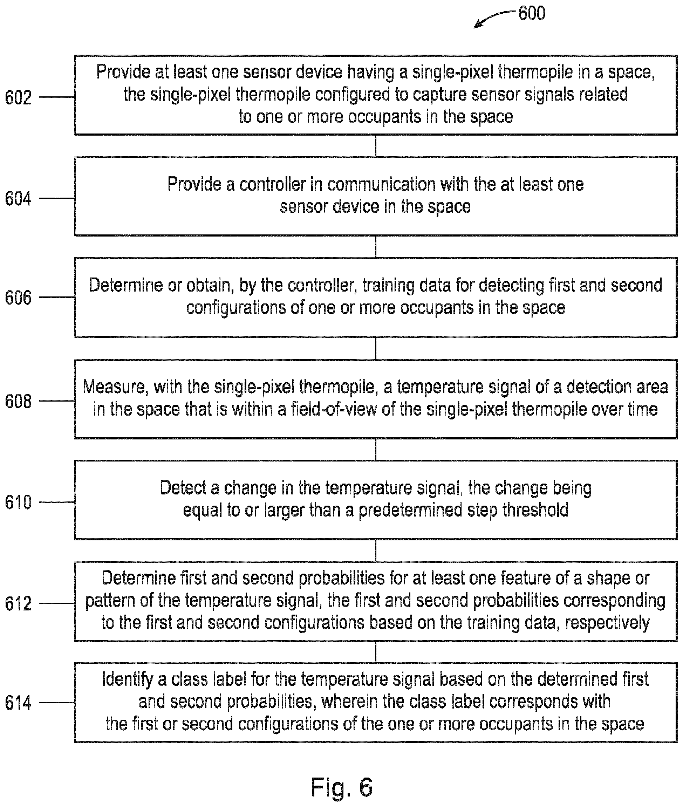

FIG. 6 is an example method 600 for determining a configuration of one or more occupants in a space. At step 602, at least one sensor device SD is provided in a space 10, the at least one sensor device having a single-pixel thermopile SPT configured to capture sensor signals related to one or more occupants in the space. As described herein, the single-pixel thermopile SPT converts thermal energy into electrical energy. At step 604, a controller 102 is provided in the space and the controller is in communication with the at least one sensor device in the space.

At step 606, the controller 102 determines or obtains training data for detecting at least first and second configurations of one or more occupants in the space. In embodiments, controller 102 determines or obtains training data for detecting at least one configuration corresponding to an anomalous or unacceptable configuration and at least one configuration corresponding to a normal or acceptable configuration. In embodiments, controller 102 determines or obtains training data for detecting two or more normal or acceptable configurations.

At step 608, the single-pixel thermopile SPT measures or obtains a temperature signal of a detection area 106 in the space over time. The detection area is within a field-of-view of the single-pixel thermopile. In embodiments, the field-of-view is approximately 90 degrees.

At step 610, the controller 102 detects a change (e.g., step change B) in the temperature signal, the change being equal to or larger than a predetermined step threshold.

At step 612, the controller 102 determines first and second probabilities for at least one feature of a shape or pattern of the temperature signal, the first and second probabilities corresponding to the first and second configurations, respectively, based on the training data determined or obtained. The first probability for the at least one feature of the shape or pattern of the temperature signal corresponds to the first configuration. The second probability for the at least one feature of the shape or pattern of the temperature signal corresponds to the second configuration.

At step 614, the controller 102 identifies a class label for the temperature signal based on the determined probabilities. The class label corresponds with the first or second configurations of the one or more occupants in the space.

In an embodiment, the first configuration represents "one person sitting" (CLASS A) and the second configuration represents "one person walking" (CLASS B), "one person walking and one person sitting" (CLASS C), "more than one person walking" (CLASS D"), or "other" (CLASS E). In such an embodiment, the method 600 can further include determining, by the controller 102, whether the posterior probability for the at least one feature of the shape or pattern of the temperature signal corresponding to the first configuration exceeds a predetermined probability threshold. Such an embodiment is applicable when the controller 102 identifies a class label corresponding with the first configuration which can represent "one person sitting" (CLASS A). If the posterior probability exceeds the predetermined probability threshold, the method 600 can further include providing a notification comprising information of the first configuration of the one or more occupants in the space as described herein.

In another embodiment in which the posterior probability does not exceed the predetermined probability threshold, the method 600 further includes transmitting a signal having information on the at least one feature of the shape or pattern of the temperature signal corresponding to the first configuration. The transmitted signal is sent to another sensor device or another controller in the space. When the posterior probability does not exceed the predetermined probability threshold, it can be deduced that the class label had an associated confidence score that was low or not reliable. Alternatively, the method 600 further includes receiving a signal having information on a shape or pattern of another temperature signal corresponding to the first configuration. The received information can be from another sensor device or another controller in the space. The information on the at least one feature of the shape or pattern of the temperature signal corresponding to the first configuration in the controller 102 can then be fused with information from another sensor device or another controller in the space for a subsequent determination of a configuration of one or more occupants in the space. Combining data from multiple SPT sensors in the space can generate a signal with an associated confidence score that is higher so that it is more reliable. Combining data from multiple SPT sensors can compensate for noise in the signal as well. Additional signal processing can also be used within any of the systems and methods described herein to identify a person in a wheelchair using their unique SPT sensor signal. t should also be understood that, unless clearly indicated to the contrary, in any methods claimed herein that include more than one step or act, the order of the steps or acts of the method is not necessarily limited to the order in which the steps or acts of the method are recited.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

## Claims

1. A system (100) for determining a configuration of one or more occupants in a space (10), comprising:
at least one sensor device (SD) comprising a single-pixel thermopile (SPT) in the space (10), wherein the single-pixel thermopile is configured to capture sensor signals related to one or more occupants (P) in the space;
a controller (102) in communication with the at least one sensor device in the space, wherein the controller is configured to:
determine or obtain (606) training data for detecting first and second configurations of one or more occupants in the space;
receive a temperature signal (300) from the single-pixel thermopile, the temperature signal corresponding to a detection area (106) in the space that is within a field-of-view of the single-pixel thermopile over time;
detect (610) a change in the temperature signal, the change being equal to or larger than a predetermined step threshold;
determine (612) first and second probabilities for at least one feature of a shape or pattern of the temperature signal, the first and second probabilities corresponding to the first and second configurations of the one or more occupants in the space based on the training data, respectively; and
identify (614) a class label for the temperature signal using the determined first and second probabilities and a posteriori probability estimate, wherein the class label corresponds with the first or second configurations of the one or more occupants in the space and wherein the posteriori probability estimate indicates the first probability or the second probability.

2. The system of claim 1, wherein when the class label corresponds with the first configuration, the controller is further configured to determine whether the first probability for the at least one feature of the shape or pattern of the temperature signal corresponding to the first configuration exceeds a predetermined probability threshold.

3. The system of claim 2, wherein when the first probability for the at least one feature of the shape or pattern of the temperature signal corresponding to the first configuration exceeds the predetermined probability threshold, the controller is further configured to provide a notification comprising information of the first configuration of the one or more occupants in the space.

4. The system of claim 2, wherein when the first probability for the at least one feature of the shape or pattern of the temperature signal corresponding to the first configuration does not exceed the predetermined probability threshold, the controller is further configured to transmit a signal comprising information on the at least one feature of the shape or pattern of the temperature signal corresponding to the first configuration to another sensor device or another controller in the space.

5. The system of claim 2, wherein when the first probability for the at least one feature of the shape or pattern of the temperature signal corresponding to the first configuration does not exceed the predetermined probability threshold, the controller is further configured to receive a signal comprising information on a shape or pattern of another temperature signal corresponding to the first configuration from another sensor device or another controller in the space.

6. The system of claim 5, wherein the controller is further configured to fuse the signal comprising the information on the at least one feature of the shape or pattern of the temperature signal corresponding to the first configuration with the signal comprising information on the shape or pattern of the another temperature signal corresponding to the first configuration from the another second device or the another controller in the space for a subsequent determination regarding the first configuration of the one or more occupants in the space.

7. The system of claim 1, wherein the at least one sensor device comprising the single-pixel thermopile is embedded within a luminaire and the luminaire is part of a plurality of connected illumination devices in the space.

8. The system of claim 1, wherein the at least one sensor device comprising the single-pixel thermopile is mounted on a doorway of the space.

9. A method (600) for determining a configuration of one or more occupants (P) in a space (10), comprising:
(a) providing (602) at least one sensor device (SD) comprising a single-pixel thermopile (SPT) in the space, the single-pixel thermopile configured to capture sensor signals related to one or more occupants in the space;
(b) providing (604) a controller in communication with the at least one sensor device in the space;
(c) determining or obtaining (606), by the controller, training data for detecting first and second configurations of one or more occupants in the space;
(d) measuring (608), with the single-pixel thermopile, a temperature signal (300) of a detection area (106) in the space that is within a field of view of the single-pixel thermopile over time;
(e) detecting (610), with the controller, a change (B) in the temperature signal, the change being equal to or larger than a predetermined step threshold;
(f) determining (612), with the controller, first and second probabilities for at least one feature of a shape or pattern of the temperature signal, the first and second probabilities corresponding to the first and second configurations of the one or more occupants in the space based on the training data, respectively; and
(g) identifying (614), with the controller, a class label (CLASS A, B, C, D, or E) for the temperature signal using the determined first and second probabilities and a posteriori probability estimate, wherein the class label corresponds with the first or second configurations of the one or more occupants in the space and wherein the posteriori probability estimate indicates the first probability or the second probability.

10. The method of claim 9, wherein when the class label corresponds with the first configuration of the one or more occupants in the space, further comprising determining (S504), with the controller, whether the first probability for the at least one feature of the shape or pattern of the temperature signal corresponding to the first configuration exceeds a predetermined probability threshold.

11. The method of claim 10, wherein when the first probability for the at least one feature of the shape or pattern of the temperature signal corresponding to the first configuration exceeds the predetermined probability threshold, further comprising providing, with the controller, a notification comprising information of the first configuration of the one or more occupants in the space.

12. The method of claim 10, wherein when the first probability for the at least one feature of the shape or pattern of the temperature signal corresponding to the first configuration does not exceed the predetermined probability threshold, further comprising transmitting, with the controller, a signal comprising information on the at least one feature of the shape or pattern of the temperature signal corresponding to the first configuration to another sensor device or another controller in the space.

13. The method of claim 12, further comprising fusing the signal comprising the information on the at least one feature of the shape or pattern of the temperature signal corresponding to the first configuration with at least one other signal from the another sensor device for a subsequent determination regarding the first configuration of the one or more occupants in the space.

14. The method of claim 9, wherein when the class label corresponds with the second configuration of the one or more occupants in the space, further comprising repeating steps (d), (e), (f), and (g) with the controller.

15. The method of claim 9, wherein the at least one sensor device comprising the single-pixel thermopile is embedded within a luminaire and the luminaire is part of a plurality of connected illumination devices in the space.

## Patentansprüche

1. System (100) zum Bestimmen einer Konfiguration eines oder mehrerer Insassen in einem Raum (10), umfassend:
mindestens eine Sensorvorrichtung (SD), umfassend eine Einzelpixel-Thermosäule (SPT) in dem Raum (10), wobei die Einzelpixel-Thermosäule konfiguriert ist, um Sensorsignale aufzunehmen, die sich auf einen oder mehrere Insassen (P) in dem Raum beziehen;
eine Steuerung (102) in Kommunikation mit der mindestens einen Sensorvorrichtung in dem Raum, wobei die Steuerung konfiguriert ist zum:
Bestimmen oder Erhalten (606) von Trainingsdaten zum Erkennen von ersten und zweiten Konfigurationen von einem oder mehreren Insassen in dem Raum;
Empfangen eines Temperatursignals (300) von der Einzelpixel-Thermosäule, wobei das Temperatursignal einem Erkennungsbereich (106) in dem Raum entspricht, der sich im Laufe der Zeit innerhalb eines Sichtfelds der Einzelpixel-Thermosäule befindet;
Erkennen (610) einer Änderung in dem Temperatursignal, wobei die Änderung gleich oder größer als ein zuvor bestimmter Schrittschwellenwert ist;
Bestimmen (612) von ersten und zweiten Wahrscheinlichkeiten für mindestens ein Merkmal einer Form oder eines Musters des Temperatursignals, wobei die ersten und zweiten Wahrscheinlichkeiten der ersten beziehungsweise der zweiten Konfiguration des einen oder der mehreren Insassen in dem Raum basierend auf den Trainingsdaten entsprechen; und
Identifizieren (614) einer Klassenbezeichnung für das Temperatursignal unter Verwendung der bestimmten ersten und zweiten Wahrscheinlichkeiten und einer A-posteriori-Wahrscheinlichkeitsschätzung, wobei die Klassenbezeichnung der ersten oder der zweiten Konfiguration des einen oder der mehreren Insassen in dem Raum entspricht und wobei die A-posteriori-Wahrscheinlichkeitsschätzung die erste Wahrscheinlichkeit oder die zweite Wahrscheinlichkeit angibt.

2. System nach Anspruch 1, wobei, wenn die Klassenbezeichnung der ersten Konfiguration entspricht, die Steuerung ferner konfiguriert ist, um zu bestimmen, ob die erste Wahrscheinlichkeit für das mindestens eine Merkmal der Form oder des Musters des Temperatursignals, das der ersten Konfiguration entspricht, einen zuvor bestimmten Wahrscheinlichkeitsschwellenwert überschreitet.

3. System nach Anspruch 2, wobei, wenn die erste Wahrscheinlichkeit für das mindestens eine Merkmal der Form oder des Musters des Temperatursignals, das der ersten Konfiguration entspricht, den zuvor bestimmten Wahrscheinlichkeitsschwellenwert überschreitet, die Steuerung ferner konfiguriert ist, um eine Benachrichtigung bereitzustellen, umfassend Informationen über die erste Konfiguration des einen oder der mehreren Insassen in dem Raum.

4. System nach Anspruch 2, wobei, wenn die erste Wahrscheinlichkeit für das mindestens eine Merkmal der Form oder des Musters des Temperatursignals, das der ersten Konfiguration entspricht, den zuvor bestimmten Wahrscheinlichkeitsschwellenwert nicht überschreitet, die Steuerung ferner konfiguriert ist, um ein Signal, umfassend Informationen über das mindestens eine Merkmal der Form oder des Musters des Temperatursignals, das der ersten Konfiguration entspricht, an eine andere Sensorvorrichtung oder eine andere Steuerung in dem Raum zu übertragen.

5. System nach Anspruch 2, wobei, wenn die erste Wahrscheinlichkeit für das mindestens eine Merkmal der Form oder des Musters des Temperatursignals, das der ersten Konfiguration entspricht, den zuvor bestimmten Wahrscheinlichkeitsschwellenwert nicht überschreitet, die Steuerung ferner konfiguriert ist, um ein Signal, umfassend Informationen über eine Form oder ein Musters eines anderen Temperatursignals, das der ersten Konfiguration entspricht, von einer anderen Sensorvorrichtung oder einer anderen Steuerung in dem Raum zu empfangen.

6. System nach Anspruch 5, wobei die Steuerung ferner konfiguriert ist, um das Signal, umfassend die Informationen über das mindestens eine Merkmal der Form oder des Musters des Temperatursignals, das der ersten Konfiguration entspricht, mit dem Signal zusammenzuführen, umfassend Informationen über die Form oder das Muster des anderen Temperatursignals, das der ersten Konfiguration entspricht, von der anderen zweiten Vorrichtung oder der anderen Steuerung in dem Raum, für eine nachfolgende Bestimmung bezüglich der ersten Konfiguration des einen oder der mehreren Insassen in dem Raum.

7. System nach Anspruch 1, wobei die mindestens eine Sensorvorrichtung, umfassend die Einzelpixel-Thermosäule, innerhalb einer Leuchte eingebettet ist und die Leuchte Teil einer Vielzahl von verbundenen Beleuchtungsvorrichtungen in dem Raum ist.

8. System nach Anspruch 1, wobei die mindestens eine Sensorvorrichtung, umfassend die Einzelpixel-Thermosäule, an einer Türöffnung des Raums montiert ist.

9. Verfahren (600) zum Bestimmen einer Konfiguration von einem oder mehreren Insassen (P) in einem Raum (10), umfassend:
(a) Bereitstellen (602) von mindestens einer Sensorvorrichtung (SD), umfassend eine Einzelpixel-Thermosäule (SPT) in dem Raum, wobei die Einzelpixel-Thermosäule konfiguriert ist, um Sensorsignale auszunehmen, die sich auf einen oder mehrere Insassen in dem Raum beziehen;
(b) Bereitstellen (604) einer Steuerung in Kommunikation mit der mindestens einen Sensorvorrichtung in dem Raum;
(c) Bestimmen oder Erhalten (606) von Trainingsdaten durch die Steuerung zum Erkennen von ersten und zweiten Konfigurationen von einem oder mehreren Insassen in dem Raum;
(d) Messen (608), mit der Einzelpixel-Thermosäule, eines Temperatursignals (300) eines Erkennungsbereichs (106) in dem Raum, der sich im Laufe der Zeit innerhalb eines Sichtfelds der Einzelpixel-Thermosäule befindet;
(e) Erkennen (610), mit der Steuerung, einer Änderung (B) in dem Temperatursignal, wobei die Änderung gleich oder größer als ein zuvor bestimmter Schrittschwellenwert ist;
(f) Bestimmen (612), mit der Steuerung, erster und zweiter Wahrscheinlichkeiten für mindestens ein Merkmal einer Form oder eines Musters des Temperatursignals, wobei die ersten und zweiten Wahrscheinlichkeiten der ersten beziehungsweise der zweiten Konfiguration des einen oder der mehreren Insassen in dem Raum basierend auf den Trainingsdaten entsprechen; und
(g) Identifizieren (614), mit der Steuerung, einer Klassenbezeichnung (KLASSE A, B, C, D oder E) für das Temperatursignal unter Verwendung der bestimmten ersten und zweiten Wahrscheinlichkeiten und einer A-posteriori-Wahrscheinlichkeitsschätzung, wobei die Klassenbezeichnung der ersten oder der zweiten Konfiguration des einen oder der mehreren Insassen in dem Raum entspricht und wobei die A-posteriori-Wahrscheinlichkeitsschätzung die erste Wahrscheinlichkeit oder die zweite Wahrscheinlichkeit angibt.

10. Verfahren nach Anspruch 9, wobei, wenn die Klassenbezeichnung der ersten Konfiguration dem einen oder den mehreren Insassen in dem Raum entspricht, ferner umfassend das Bestimmen (S504), mit der Steuerung, ob die erste Wahrscheinlichkeit für das mindestens eine Merkmal der Form oder des Musters des Temperatursignals, das der ersten Konfiguration entspricht, einen zuvor bestimmten Wahrscheinlichkeitsschwellenwert überschreitet.

11. Verfahren nach Anspruch 10, wobei, wenn die erste Wahrscheinlichkeit für das mindestens eine Merkmal der Form oder des Musters des Temperatursignals, das der ersten Konfiguration entspricht, den zuvor bestimmten Wahrscheinlichkeitsschwellenwert überschreitet, ferner umfassend das Bereitstellen, mit der Steuerung, einer Benachrichtigung, umfassend Informationen über die erste Konfiguration des einen oder der mehreren Insassen in dem Raums.

12. Verfahren nach Anspruch 10, wobei, wenn die erste Wahrscheinlichkeit für das mindestens eine Merkmal der Form oder des Musters des Temperatursignals, das der ersten Konfiguration entspricht, den zuvor bestimmten Wahrscheinlichkeitsschwellenwert nicht überschreitet, ferner umfassend das Übertragen, mit der Steuerung, eines Signals, umfassend Informationen über das mindestens eine Merkmal der Form oder des Musters des Temperatursignals, das der ersten Konfiguration entspricht, an eine andere Sensorvorrichtung oder eine andere Steuerung in dem Raum.

13. Verfahren nach Anspruch 12, ferner umfassend das Zusammenführen des Signals, umfassend die Informationen über das mindestens eine Merkmal der Form oder des Musters des Temperatursignals, das der ersten Konfiguration entspricht, mit mindestens einem anderen Signal von der anderen Sensorvorrichtung für eine nachfolgende Bestimmung bezüglich der ersten Konfiguration des einen oder der mehreren Insassen des Raums.

14. Verfahren nach Anspruch 9, wobei, wenn die Klassenbezeichnung der zweiten Konfiguration des einen oder der mehreren Insassen in dem Raum entspricht, ferner umfassend ein Wiederholen der Schritte (d), (e), (f) und (g) mit der Steuerung.

15. Verfahren nach Anspruch 9, wobei die mindestens eine Sensorvorrichtung, umfassend die Einzelpixel-Thermosäule, innerhalb einer Leuchte eingebettet ist und die Leuchte Teil einer Vielzahl von verbundenen Beleuchtungsvorrichtungen in dem Raum ist.

## Revendications

1. Système (100) permettant de déterminer une configuration d'un ou plusieurs occupants dans un espace (10), comprenant :
au moins un dispositif capteur (SD) comprenant une thermopile à pixel unique (SPT) dans l'espace (10), dans lequel la thermopile à pixel unique est configurée pour capturer des signaux de capteur liés à un ou plusieurs occupants (P) dans l'espace ;
un dispositif de commande (102) en communication avec l'au moins un dispositif capteur dans l'espace, dans lequel le dispositif de commande est configuré pour :
déterminer ou obtenir (606) des données d'entraînement afin de détecter des première et seconde configurations d'un ou plusieurs occupants dans l'espace ;
recevoir un signal de température (300) à partir de la thermopile à pixel unique, le signal de température correspondant à une zone de détection (106) dans l'espace qui se trouve à l'intérieur d'un champ de vision de la thermopile à pixel unique au fil du temps ;
détecter (610) un changement dans le signal de température, le changement étant égal ou supérieur à un seuil de pas prédéterminé ;
déterminer (612) des première et seconde probabilités pour au moins une caractéristique d'une forme ou d'un motif du signal de température, les première et seconde probabilités correspondant aux première et seconde configurations du ou des occupants dans l'espace sur la base des données d'entraînement, respectivement ; et
identifier (614) une étiquette de classe pour le signal de température à l'aide des première et seconde probabilités déterminées et d'une estimation de probabilité a posteriori, dans lequel l'étiquette de classe correspond aux première ou seconde configurations du ou des occupants dans l'espace et dans lequel l'estimation de probabilité a posteriori indique la première probabilité ou la seconde probabilité.

2. Système selon la revendication 1, dans lequel, lorsque l'étiquette de classe correspond à la première configuration, le dispositif de commande est en outre configuré pour déterminer si la première probabilité pour l'au moins une caractéristique de la forme ou du motif du signal de température correspondant à la première configuration dépasse un seuil de probabilité prédéterminé.

3. Système selon la revendication 2, dans lequel, lorsque la première probabilité pour l'au moins une caractéristique de la forme ou du motif du signal de température correspondant à la première configuration dépasse le seuil de probabilité prédéterminé, le dispositif de commande est en outre configuré pour fournir une notification comprenant des informations de la première configuration du ou des occupants dans l'espace.

4. Système selon la revendication 2, dans lequel, lorsque la première probabilité pour l'au moins une caractéristique de la forme ou du motif du signal de température correspondant à la première configuration ne dépasse pas le seuil de probabilité prédéterminé, le dispositif de commande est en outre configuré pour transmettre un signal comprenant des informations sur l'au moins une caractéristique de la forme ou du motif du signal de température correspondant à la première configuration à un autre dispositif capteur ou à un autre dispositif de commande dans l'espace.

5. Système selon la revendication 2, dans lequel, lorsque la première probabilité pour l'au moins une caractéristique de la forme ou du motif du signal de température correspondant à la première configuration ne dépasse pas le seuil de probabilité prédéterminé, le dispositif de commande est en outre configuré pour recevoir un signal comprenant des informations sur une forme ou un motif d'un autre signal de température correspondant à la première configuration à partir d'un autre dispositif capteur ou d'un autre dispositif de commande dans l'espace.

6. Système selon la revendication 5, dans lequel le dispositif de commande est en outre configuré pour fusionner le signal comprenant les informations sur l'au moins une caractéristique de la forme ou du motif du signal de température correspondant à la première configuration avec le signal comprenant les informations sur la forme ou le motif de l'autre signal de température correspondant à la première configuration à partir de l'autre seconde dispositif ou de l'autre dispositif de commande dans l'espace pour une détermination ultérieure concernant la première configuration du ou des occupants dans l'espace.

7. Système selon la revendication 1, dans lequel l'au moins un dispositif capteur comprenant la thermopile à pixel unique est intégré dans un luminaire et le luminaire fait partie d'une pluralité de dispositifs d'éclairage connectés dans l'espace.

8. Système selon la revendication 1, dans lequel l'au moins un dispositif capteur comprenant la thermopile à pixel unique est monté sur une porte de l'espace.

9. Procédé (600) permettant de déterminer une configuration d'un ou plusieurs occupants (P) dans un espace (10), comprenant :
(a) la fourniture (602) d'au moins un dispositif capteur (SD) comprenant une thermopile à pixel unique (SPT) dans l'espace, la thermopile à pixel unique étant configurée pour capturer des signaux de capteur liés à un ou plusieurs occupants dans l'espace ;
(b) la fourniture (604) d'un dispositif de commande en communication avec l'au moins un dispositif capteur dans l'espace ;
(c) la détermination ou l'obtention (606), par le dispositif de commande, de données d'entraînement afin de détecter des première et seconde configurations d'un ou plusieurs occupants dans l'espace ;
(d) la mesure (608), avec la thermopile à pixel unique, d'un signal de température (300) d'une zone de détection (106) dans l'espace qui se trouve à l'intérieur d'un champ de vision de la thermopile à pixel unique au fil du temps ;
(e) la détection (610), avec le dispositif de commande, d'un changement (B) dans le signal de température, le changement étant égal ou supérieur à un seuil de pas prédéterminé ;
(f) la détermination (612), avec le dispositif de commande, de première et seconde probabilités pour au moins une caractéristique d'une forme ou d'un motif du signal de température, les première et seconde probabilités correspondant aux première et seconde configurations du ou des occupants dans l'espace sur la base des données d'entraînement, respectivement ; et
(g) l'identification (614), avec le dispositif de commande, d'une étiquette de classe (CLASSE A, B, C, D ou E) pour le signal de température à l'aide des première et seconde probabilités déterminées et d'une estimation de probabilité a posteriori, dans lequel l'étiquette de classe correspond aux première ou seconde configurations du ou des occupants dans l'espace et dans lequel l'estimation de probabilité a posteriori indique la première probabilité ou la seconde probabilité.

10. Procédé selon la revendication 9, dans lequel, lorsque l'étiquette de classe correspond à la première configuration du ou des occupants dans l'espace, comprenant en outre la détermination (S504), avec le dispositif de commande, du fait que la première probabilité pour l'au moins une caractéristique de la forme ou du motif du signal de température correspondant à la première configuration dépasse un seuil de probabilité prédéterminé.

11. Procédé selon la revendication 10, dans lequel, lorsque la première probabilité pour l'au moins une caractéristique de la forme ou du motif du signal de température correspondant à la première configuration dépasse le seuil de probabilité prédéterminé, comprenant en outre la fourniture, avec le dispositif de commande, d'une notification comprenant des informations de la première configuration du ou des occupants dans l'espace.

12. Procédé selon la revendication 10, dans lequel, lorsque la première probabilité pour l'au moins une caractéristique de la forme ou du motif du signal de température correspondant à la première configuration ne dépasse pas le seuil de probabilité prédéterminé, comprenant en outre la transmission, avec le dispositif de commande, d'un signal comprenant des informations sur l'au moins une caractéristique de la forme ou du motif du signal de température correspondant à la première configuration à un autre dispositif capteur ou à un autre dispositif de commande dans l'espace.

13. Procédé selon la revendication 12, comprenant en outre la fusion du signal comprenant les informations sur l'au moins une caractéristique de la forme ou du motif du signal de température correspondant à la première configuration avec au moins un autre signal à partir de l'autre dispositif capteur pour une détermination ultérieure concernant la première configuration du ou des occupants dans l'espace.

14. Procédé selon la revendication 9, dans lequel, lorsque l'étiquette de classe correspond à la seconde configuration du ou des occupants dans l'espace, comprenant en outre la répétition des étapes (d), (e), (f) et (g) avec le dispositif de commande.

15. Procédé selon la revendication 9, dans lequel l'au moins un dispositif capteur comprenant la thermopile à pixel unique est intégré dans un luminaire et le luminaire fait partie d'une pluralité de dispositifs d'éclairage connectés dans l'espace.
